# EUROPEAN PATENT SPECIFICATION

(11) **EP 2 228 722 B1**
(45) Date of publication and mention of the grant of the patent: **23.11.2011**
(21) Application number: 09155022.8
(22) Date of filing: 12.03.2009
(51) Int. Cl.: G06F 11/00, G06F 21/00

(54) **System and method for file integrity monitoring using timestamps**
System und Verfahren zur Dateiintegritätsüberwachung mithilfe von Zeitstempeln
Système et procédé de surveillance de l'intégrité d'un fichier en utilisant des horodatages

(43) Date of publication of application: 15.09.2010
(73) Proprietor: Kaspersky Lab, ZAO, Moscow 123060 (RU)
(72) Inventor: Pavlyushchik, Mikhail A., Moscow 123060 (RU)
(74) Representative: Neobard, William John

(56) References cited:
- US-A1- 2005 120 239
- US-A1- 2006 288 051
- US-A1- 2006 294 589
- US-A1- 2007 140 301

## Description

The present invention is related to monitoring file integrity, and more particularly, to a more reliable methods of using timestamps to verify whether or not a file has been modified.

Pile integrity is important in many computer applications. There are many applications where knowledge of whether the file has been modified is important - for example, where the user is trying to restore the state of the system (or the state of an application) to what it was at some earlier point in time. Also, files can be changed accidentally or deliberately, the file can overwritten, portions of files can be overwritten accidentally car intentionally, etc. For example, in the context of virus protection and protection from other malware risks, it is important to know whether or not a particular file has been modified.

There are two conventional methods four testing whether a particular file has been modified. The first method involves the use of timestamps. All modern operating systems have a facility for keeping track of the least date and time when the file was modified. However, the problem with relying solely on this operating system futility is that a user application normally has rights to modify the timestamp directly. Thus, a malicious application could easily take advantage of this fact by saving the earlier timestamp of the file, and, after modifying the file, replacing the new timestamp with the timestamp of that file prior to the modification. Therefore, a check that relies only on the timestamp would show that the file had not been modified, when, in fact, it had been. At the same time, disabling the ability of user application, to change file timestamps is often impossible, since there are legitimate applications that may need to access and alter the timestamps.

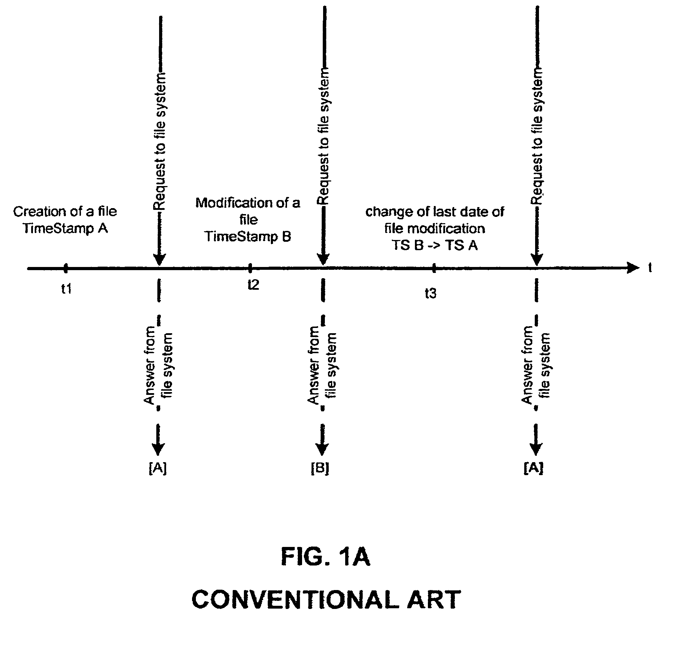

FIG. 1A illustrates a timeline of how the monitoring that only relies on the files systems timestamp function can be subverted. As shown in FIG. 1A, at the time t1, the file has a Timestamp A. After that point in time, a request to the file system will produce a response that corresponds to the Timestamp A.

Subsequently, the file has been modified, and now has a Timestamp B, at the time t2. At that point, a request to the file system will result in a response that corresponds to the Timestamp B.

At the time t3, a malicious application directly accesses the timestamps and modifies the timestamp from B back to A, therefore, a request to the file system after that point will produce a response that corresponds to the timestamp A which does not reflect the fact that the file has been modified in the meantime.

Another approach to tracking file modifications involves the use of various functions, typically one-way function, such as hashes. A hash is a one-wary transformation of a file into a (usually) much smaller binary value, so that a change in the content of the life would normally produce a different hash value. The MD5 hash function is frequently used in many computer applications of this kind. The problem with this approach is that generating hash values is a relatively computationally intensive task, particularly for large files. For example, many current applications require loading of multi-megabyte files into memory, prior to execution. If it were necessary to generate a hash of these files every time the application was launched, the user would suffer from a long delay before the application actually is up and running. Today, most users would find this annoying and irritating.

Document US2007140301 A1 relates to systems and methods for logging of monitored network parameters. A counter monitor monitors and records values of counters at time intervals to generate a counter log provided via temporary or permanent storage. The counter representing network traffic information. In order to reduce storage resource usage, the counter monitor also stores changes to the timestamps as differential changes in time values.

Document US2005120239 A1 relates to integrity monitoring of a file computer system. It watches over the files and directories that define the computer system. When computers and computer systems are accessed in an unauthorized manner, the state of various files will likely change, indicating a possible compromise of the systems. Accordingly, a computer integrity monitoring system accurately monitors changes in the components of a computer system and records both the checks that were performed by the integrity monitoring system and the changes that were detected.

Accordingly, there is a need in the art for a fast mechanism that permits checking whether or not a file has been modified.

Accordingly, embodiments are related to a system and method for monitoring file integrity using timestamps that substantially obviates one or more of the disadvantages of the related art.

In one aspect, there is provided a system, method and computer program product that includes intercepting a function call by a user application to change a timestamp of a file; updating a record of a number of times the timestamp has been changed, where, optionally the record is maintained in operating system space; in response to a monitoring application requesting the record, providing, to the monitoring application, the record for comparison with information maintained by the monitoring application; and taking a specified action (e.g., starting an antivirus scan, or informing a user) if the record does not correspond to the information maintained by the monitoring application. This process can be performed for multiple files, and each file can have a corresponding record. The records can be kept in a database in operating system space. The monitoring application can maintain a database of a number of times the timestamp of the files have been modified. The record is, e.g., a counter

These objets are solved in advantageous manner logically by applying the features laid down in independent claim 1 and 10.

Additional features and advantages will be set forth in the description that follows, and in part will be apparent from the description, or may be learned by practice of the invention.

In the drawings:
FIG. 1A illustrates a timeline of how the monitoring that only relies on the conventional file system's timestamp function can be subverted.
FIG. 1B illustrates a time line of how a monitoring process embodying the present invention will identify, using a counter that the file system's timestamp function cannot be relied upon.
FIG. 2 illustrates die algorithm of the driver of one embodiment.
FIG. 3 illustrates how the application uses the driver described earlier to verify file integrity.
FIGS. 4A and 4B illustrate the addition of an interceptor for monitoring of timestamp change requests.
FIG. 5 illustrates the operation of the interceptor.
FIG. 6 illustrates the operation of the driver of one embodiment.
FIG. 7 illustrates, in block diagram form, the interaction between various elements, as contemplated in one embodiment.
FIG. 8 illustrates another diagram that shows the behavior of a driver.
FIG. 9 illustrates an example of a computer on which embodiments of the invention may be implemented.

An embodiment relies on the timestamp mechanism of the operating system to provide an indication that a file has been modified. In one embodiment, a driver is added to the operating system, whose purpose is to keep track of file accesses for all files, for a single file, or for some subset of files that is of a particular interest.

An embodiment is also based on the property of the file system to change the timestamp automatically whenever a file is modified. In order to change the timestamp and only the timestamp, it is necessary to call an operating system function responsible for changing timestamps. Accordingly, a driver can be added to the operating system whose primary purpose is to track whether the function that update the timestamp has been invoked. The driver is essentially a module added to the operating system which provides additional services to the user applications. For example, the driver can intercept such requests and maintain a counter in its database for each file at issue. When the timestamp function is invoked, the counter is incremented by one. Thus, monitoring application can later compare the previous values of the counter and the timestamp with current values of the counter and the timestamp and determine which file at issue has in fact been written to.

With this information, it is possible to then decide whether the file needs further analysis. For example, in the close of antivirus software, if the driver's database shows that the timestamp has not been affected since some previous point in time, it is probably not necessary to go through a procedure that checks whether the file contains a virus. If the counter shows that the timestamp has been updated, and the timestamp remains unchanged, this may be treated as an indication that something has changed or corrupted the file, such as a virus, and closer attention should be paid to that file.

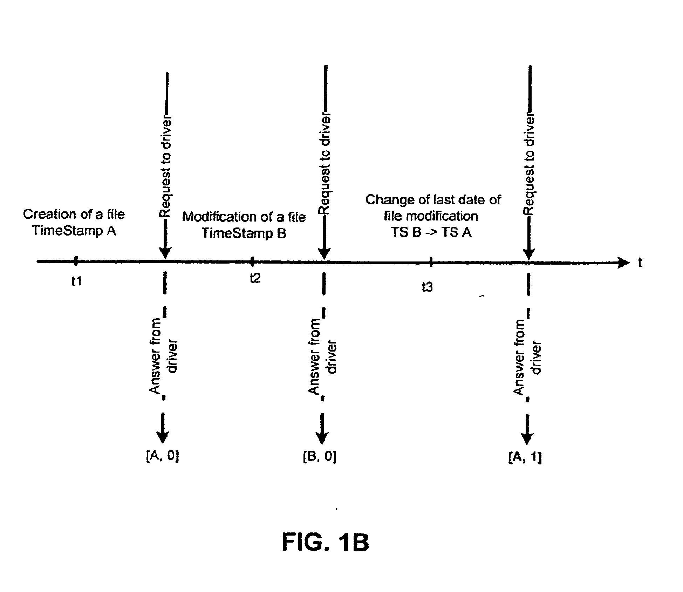

FIG. 1B illustrate a timeline of how the monitoring that only relies not on the file system's timestamp function but also on an embodiment of a driver cannot be subverted in the same manner as the file system's timestamp function alone. As shown in FIG. 1B, at time t1, the file has a Timestamp A, and a timestamp change counter (TSCOUNTER) value 0. After that point in time, a request to the driver (see 710 and discussion below) will produce a response that corresponds to the Timestamp A and counter TSCOUNTER value 0.

Subsequently the file has been modified and now has a Timestamp B, at the time t2, At that point, a request to the driver will result in a response that corresponds to the Timestamp B and a counter TSCOUNTER value 0.

At the time to a malicious application directly accesses the timestamp, and modifies the timestamp from B back to A, therefore a request to the driver after that point will produce a response that corresponds to the timestamp A, and the counter TSCOUNTER value of 1., which reflects the fact that the file timestamp has been modified in the meantime. In that event, the behavior of any other user applications can be changed to take this fact into account, for example, by informing the user of this fact or automatically starting a virus scan, etc.

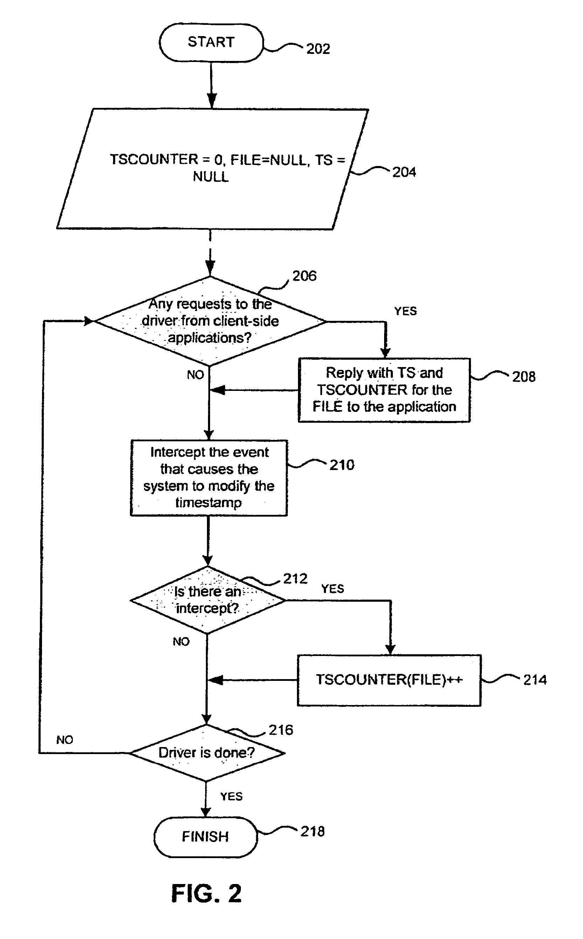

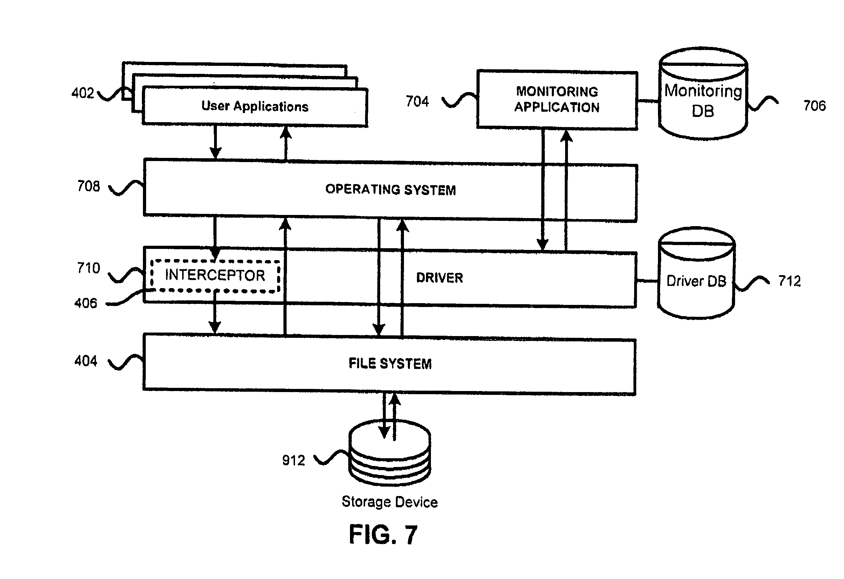

FIG. 2 illustrates the algorithm of the driver 710 (see FIG. 7) of one embodiment of the invention. The algorithm starts in step 202. In step 204, various initializations are executed. TSCOUNTER is a counter of the modifications for the FILE in the driver's database, FILE is a pointer to the object file being monitored, TS is the timestamp of the file. TSCOUNTER is set to 0, the pointer (FILE) to the file being monitored is set to null and the timestamp (TS) is also set to null.

In step 206, the driver 710 waits for requests from a monitoring application 704 (see FIG. 7) for the timestamp TS and the number of changes, as reported in the counter TSCOUNTER. If a request has been received, in step 208, the driver 710 returns the timestamp TS and the counter value TSCOUNTER for the particular file (identified by FILE), back to the monitoring application 704. If no requests have been received, the driver 710 intercepts events that cause the file system to modify the timestamp TS, regardless of their source, in step 210. In step 212, the driver 710 checks whether a system call to modify the timestamp TS has been intercepted. If the system call has been intercepted, then, in step 214, the driver 710 increments the counter TSCOUNTER for that file. In step 216, the driver 710 checks whether it needs to continue to be active. If the driver 710 is done, then the process finishes in step 218. Otherwise, the algorithm returns to step 206.

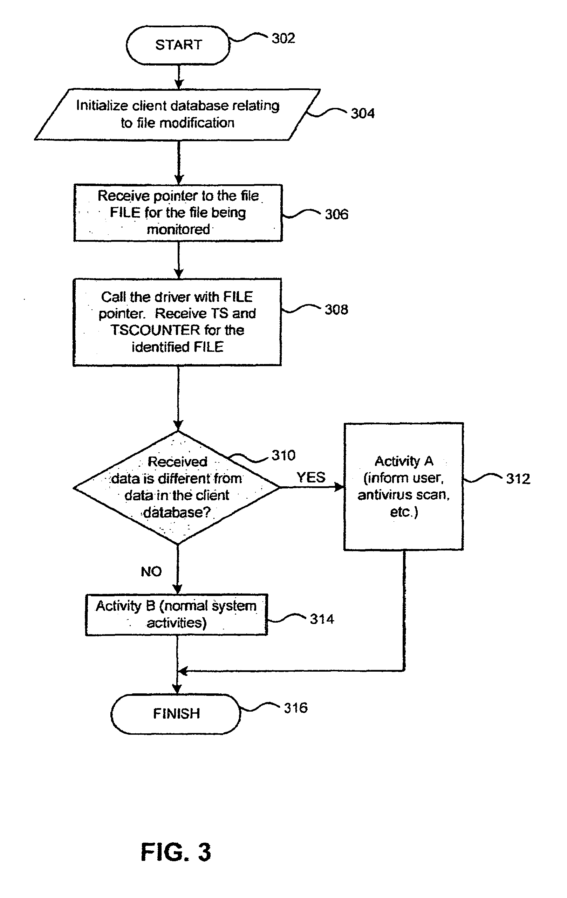

FIG. 3 illustrates how the monitoring application 704 uses the driver 710 described earlier to verify file integrity. As shown in FIG. 3, after the process starts in step 302, the monitoring application 704 accesses the database that it maintains, where the database relates to object (file) modification (step 304). In step 306, the pointer FILE to the file at issue is generated or received, In step 308, the monitoring application 704 calls the driver 710 using the pointer (FILE) to the particular file, and receives the timestamp TS and the counter value TSCOUNTER back from the driver 710. In step 310, the monitoring application 704 checks whether the data that it receives is different from the data in the monitoring database 706. The database is preferably maintained in operating system space, and is only accessable to the driver 710. If the data about timestamp modifications is different, then certain actions can be taken, e.g., informing the user (or running a virus scan, etc., see step 312.) If the data about timestamp modifications is the same, then, normal system activities can continue, see step 314. The process finishes in step 316.

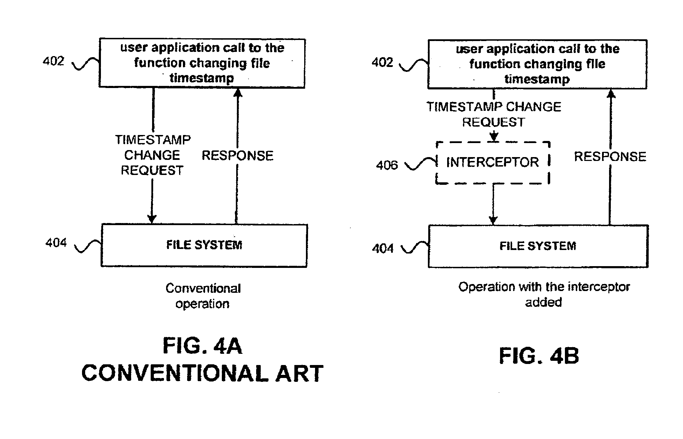

FIGS. 4A and 4B illustrate the addition of an interceptor to the scheme that affects the timestamps in the file system. In FIG. 4A, which shows a conventional approach, a user application 402 issues a call to the function SETFILETIME of the file system 404. (In this discussion, the file system is a Microsoft Windows file system, although the invention is not limited to MS Windows and the file system also includes standard operating system utilities and timestamp mechanisms.) The file system 404 then returns a response (the timestamp TS) back to the application 402.

As shown in FIG. 4B, the interceptor 406 is inserted between the user application 402 and the file system 404, such that any invocation of the timestamps change request function is intercepted by the interceptor 406.

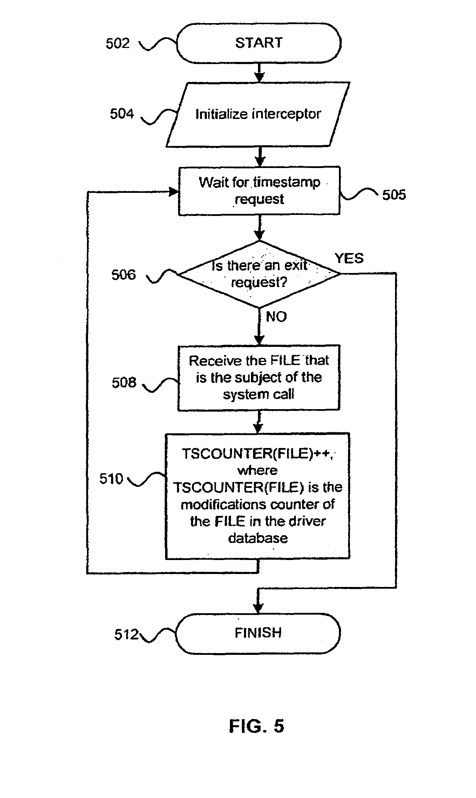

FIG. 5 illustrates operation of the interceptor 406. As shown in FIG. 5, after the algorithm starts in step 502, the interceptor 406 is initialized, in step 504. In step 506, the interceptor 406 awaits an invocation of the timestamp change request function (for examples the SETFILETIME function in MS Windows). The interceptor 406 then waits for attempts to invoke the timestamp change request function (505).

If a request to terminate the process is received, then the algorithm ends in step 512. Otherwise, if the timestamp change request has been received, then in step 508, the interceptor 406 identifies the file subject to the timestamp change request, In step 510, the interceptor 406 increments the counter value TSCOUNTER that corresponds to that file in its database, and the algorithm returns to step 505.

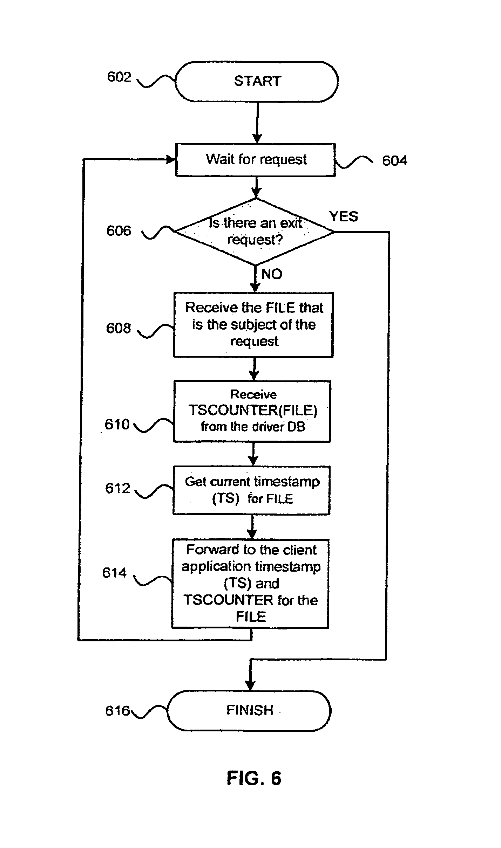

FIG. 6 illustrates the operation of the driver 710. As shown in FIG. 6, once the driver 710 has been activated in step 602, the driver 710 then waits for a request for a timestamp (TS) from the monitoring application 704 in step 604. In step 606, if there is a request to terminate the driver, the algorithm ends in step 616. Otherwise, in step 608, the driver receives the file identifier FILE for the file at issue. In step 610, the driver 710 receives the value of the counter TSCOUNTER from its database for the identified file. In step 612, the driver 710 gets the current timestamp TS for the identified fire. In step 614, the driver 710 returns back to the monitoring application 704 the current timestamp TS from the file system 404 and the counter value TSCOUNTER for that file. After that, the algorithm returns to step 604.

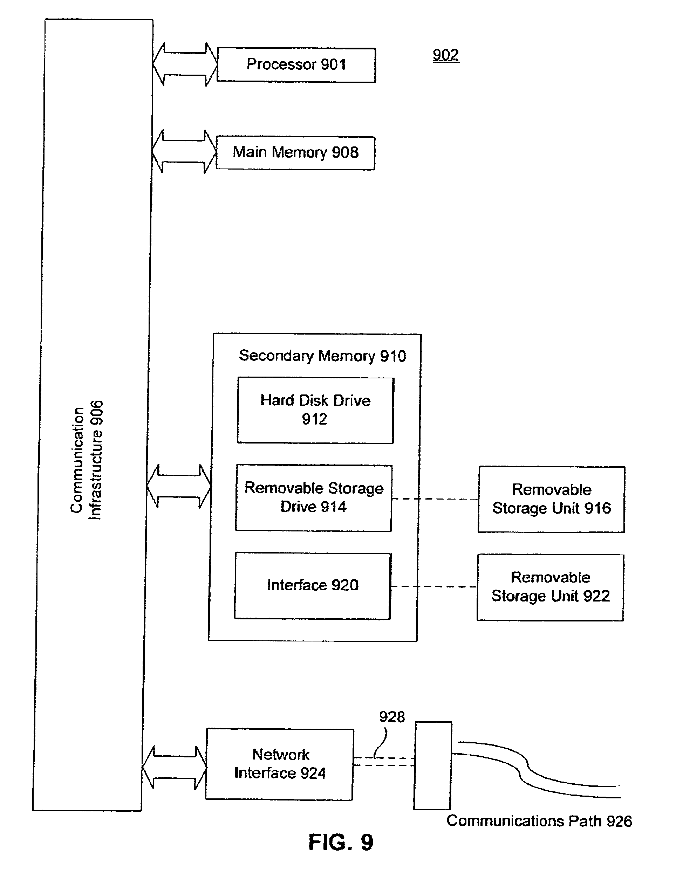

FIG. 7 illustrates, in block diagram form, the interaction between various elements, as contemplated in one embodiment. A shown in FIG. 7, the file system 404 is stored on a storage device 912, see also FIG. 9. The file system 404 communicates with the operating system 708 through the driver 710, which includes the interceptor 406 discussed earlier. The driver 710 has a database 712, which stores the file identifiers, and counter values for those files. User applications 402 can issue file access calls to the operating system 708, which passes them to the file system 404 through die driver 710. A particular monitoring application 704 that is interested in monitoring file integrity also communicates with the driver 710 and has a monitoring database 706, where it stores values of the timestamp TS and the counter TSCOUNTER for each file from the driver 710, which it can later compare with the values in the driver database 712.

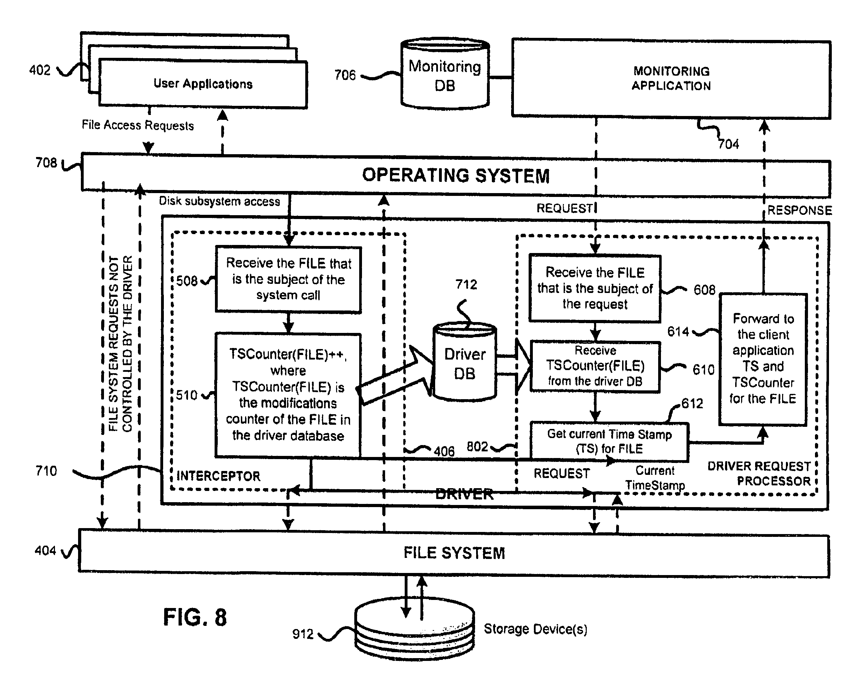

FIG. 8 illustrates how the driver 710 interacts with the various elements at issue. As shown in FIG. 7, various user applications 402 that access the file system 404 through the operating system 708 issue file access requests. The operating system 708 passes those file access requests to the file system 404. Some of these file access requests are not subject to monitoring (e.g., for files that are not being monitored), and therefore are passed to the file system 404 directly. Other file systems requests are subject to monitoring and therefore are handled by the driver 710, which includes the interceptor 406. The interceptor 406 receives the file identifier (FILE) and increments the counter TSCOUMTER, which is reflected in the driver database 712.

When the monitoring application 704 needs to verify whether something has been written to the file without it being reflected in the timestamp the monitoring application 704 issues a request to the driver 710, which is handled by the driver request processor 802. The driver request processor 802 receives the file identifier, then queries the driver database 712 for the counter value and gets current timestamp TS. The counter TSCOUNTER value and the timestamp TS are then returned back to the monitoring application 704.

Although the invention is applicable to antivirus software, the invention is not limited to this application. Other anti-malware applications are also possible, for example, various anti-spyware, anti-adware, firewall software, etc., can also benefit from it. If there is a set of files whose integrity the user needs to monitor closely, for example, due to frequent updates, or for any other reason, this approach works in that situation as well.

An example of the computing system on which the present invention can be implemented, such as the client-side computer 902 is illustrated in FIG. 9. The computing system 902 includes one or more processors, such as processor 901. The processor 901 is connected to a communication infrastructure 906, such as a bus or network. Various software implementations are described in terms of this exemplary computer system. After reading this description, it will become apparent to a person skilled in the relevant art how to implement the invention using other computer systems and/or computer architectures.

Computing system 902 also includes a main memory 908 (usually random access memory (RAM)), and may also include a secondary memory 910. The secondary memory 910 may include, for example, a hard disk drive 912 and/or a removable storage drive 914, representing a magnetic tape derive, an optical disk drive, etc. The removable storage drive 914 reads from and/or writes to a removable storage unit 916 using a corresponding interface. Removable storage unit 916 represents a magnetic tape, optical disk, or other storage medium that is READ by and written to by removable storage drive 914. As will be appreciated, the removable storage unit 918 can include a computer usable storage medium having stored therein computer software and/or data.

In alternative implementations, secondary memory 910 may include other means for allowing computer programs or other instructions to be loaded into computing system 902. Such means may include, for example, a removable storage unit 922 and an interface 920. An example of such means may include a removable memory chip (such as an EPROM, or PROM) and associated socket, or other removable storage units 922 and interfaces 920 which allows software and data to be transferred from the removable storage unit 22 to computing system 902.

Computing system 902 may also include one or more communication interfaces, such as communications interface 924. Communications interface 924 allows software and data to be transferred between computing system 902 and external devices. Examples of communications interface 924 may include a modem, a network interface (such as an Ethernet card), a communications port, a PCMCIA slot and card, etc. Software and data transferred via communications interface 924 are in the form of signals 928 which may be electronic, electromagnetic, optical or other signals capable of being received by communications interface 924, These signals 928 are provided to communications interface 924 via a communications path (i.e., channel) 926. This channel 926 carries signals 928 and may be implemented using a wire or cable, fiber optics, an RF link and other communications channels. In an embodiment, signals 928 comprise data packets sent to processor 901. Information representing processed packets can also be set in the form of signals 928 from processor 901 through communications path 926.

The terms "computer program medium" and "computer usable medium" are used to generally refer to media such as removable storage units 916 and 922, a hard disk installed in bard disk drive 912, and signals 928, which provide software to the computing system 902.

Computer programs are stored in main memory 908 and/or secondary memory 910. Computer programs may also be received via communications interface 924. Such computer programs, when executed, enable the computing system 902 to implement embodiments as discussed wherein. In particular, the computer programs, when executed, enable the processor 901 to implement embodiments. Where the embodiments are implemented using software, the software may be stored in a computer program product and loaded into computing system 902 using removable storage drive 914, hard drive 912 or communications interface 924.

The invention is not restricted to the above-described features.

## Claims

1. A method of monitoring file integrity, the method comprising:
(a) automatically intercepting a system request to change a timestamp of a file;
(b) automatically updating a record of a number of times the timestamp has been changed;
(c) in response to a monitoring application requesting the record, automatically providing to the monitoring application, the record for comparison with information maintained by the monitoring application; and
(d) automatically changing change behavior of the monitoring application if the record does not correspond to the information maintained by the monitoring application.

2. The method of claim 1, wherein the record includes a counter.

3. The method of any preceding claim, wherein steps (a)-(d) are performed for multiple files, and wherein each file has a corresponding record and a corresponding timestamp.

4. The method of claim 3, wherein the records are maintained in a database.

5. The method of claim 3, wherein the monitoring application maintains a database of a number of times the timestamps of the files have been modified.

6. The method of any preceding claim, wherein the system request is generated by the operating system.

7. The method of any preceding claim, wherein the system request is generated by a user application.

8. The method of any preceding claim, wherein access to the record is restricted to a timestamp monitoring driver that maintains the record.

9. The method of any preceding claim, wherein access to the record is provided to a timestamp monitoring driver that maintains the record.

10. A system for automatically monitoring file integrity, the system comprising:
a computer system configured to include:
an operating system timestamp change function that sets a file modification time upon invocation;
an interceptor that detects when the timestamp function is invoked;
a record associated with the file and updated when a timestamp of the file is changed using the timestamp change function; and
a monitoring application that changes its behavior if the record information does not correspond to the information maintained by the monitoring application.

11. The system of claim 10, wherein the system is configured to maintain records for multiple files, and wherein each file has a corresponding record.

12. The system of claim 11, wherein the records are maintained in a database.

13. The system of any of claims 10-12, further comprising a monitoring application database that the monitoring application is adapted to use to compare the record of the driver with its own records.

14. The system of any of claims 10-13, wherein the record contains an update on each invocation of the timestamp function.

15. The system of any of claims 10-14, wherein the monitoring application maintains a database of timestamp counters.

16. **A computer readable medium having computer-executable instructions adapted to cause a computer system to perform a method of any of claims 1 to 9.**

## Patentansprüche

1. Verfahren zum Überwachen der Dateiintegrität, wobei das Verfahren Folgendes aufweist:
(a) automatisches Auffangen einer Systemanfrage zum Ändern eines Zeitstempels einer Datei;
(b) automatisches Aktualisieren einer Aufzeichnung einer Anzahl von Malen, wie oft der Zeitstempel geändert wurde;
(c) als Reaktion auf eine Überwachungsanwendung, welche die Aufzeichnung anfordert, automatisches Bereitstellen der Aufzeichnung an die Überwachungsanwendung zum Vergleich mit Informationen, welche die Überwachungsanwendung enthält; und
(d) automatisches Ändern des Verhaltens der Überwachungsanwendung, wenn die Aufzeichnung nicht den in der Überwachungsanwendung enthaltenen Informationen entspricht.

2. Verfahren nach Anspruch 1, wobei die Aufzeichnung einen Zähler enthält.

3. Verfahren nach einem der vorhergehenden Ansprüche, wobei die Schritte (a)-(d) für mehrere Dateien durchgeführt werden, und wobei jede Datei eine entsprechende Aufzeichnung und einen entsprechenden Zeitstempel hat.

4. Verfahren nach Anspruch 3, wobei die Aufzeichnungen in einer Datenbank enthalten sind.

5. Verfahren nach Anspruch 3, wobei die Überwachungsanwendung eine Datenbank einer Anzahl von Malen, wie oft die Zeitstempel der Dateien verändert wurden, enthält.

6. Verfahren nach einem der vorhergehenden Ansprüche, wobei die Systemanfrage vom Betriebssystem generiert wird.

7. Verfahren nach einem der vorhergehenden Ansprüche, wobei die Systemanfrage von einer Benutzeranwendung generiert wird.

8. Verfahren nach einem der vorhergehenden Ansprüche, wobei der Zugriff auf die Aufzeichnung auf einen Treiber zur Überwachung des Zeitstempels beschränkt ist, der die Aufzeichnung enthält.

9. Verfahren nach einem der vorhergehenden Ansprüche, wobei der Zugriff auf die Aufzeichnung einem Treiber zur Überwachung des Zeitstempels gewährt wird, der die Aufzeichnung enthält.

10. System zum automatischen Überwachen der Dateiintegrität, wobei das System Folgendes aufweist:
ein Computersystem das konfiguriert ist Folgendes zu enthalten:
eine Funktion des Betriebssystems zum Ändern des Zeitstempels, die bei Aufrufung eine Zeit für eine Dateimodifikation festlegt;
einen Interceptor, der das Aufrufen der Zeitstempelfunktion detektiert;
eine Aufzeichnung, die zu der Datei gehört und aktualisiert wird, wenn ein Zeitstempel der Datei mit der Funktion zum Ändern des Zeitstempels geändert wird; und
eine Überwachungsanwendung, die ihr Verhalten ändert, wenn die Informationen der Aufzeichnung nicht den in der Überwachungsanwendung enthaltenen Informationen entsprechen.

11. System nach Anspruch 10, wobei das System konfiguriert ist, Aufzeichnungen für mehrere Dateien zu enthalten, und wobei jede Datei eine entsprechende Aufzeichnung hat.

12. System nach Anspruch 11, wobei die Aufzeichnungen in einer Datenbank enthalten sind.

13. System nach einem der Ansprüche 10 - 12, des Weiteren aufweisend eine Datenbank der Überwachungsanwendung, zu deren Verwendung die Überwachungsanwendung ausgelegt ist, um die Aufzeichnung des Treibers mit ihren eigenen Aufzeichnungen zu vergleichen.

14. System nach einem der Ansprüche 10 - 13, wobei die Aufzeichnung eine Aktualisierung über jede Aufrufung der Zeitstempelfunktion enthält.

15. System nach einem der Ansprüche 10 - 14, wobei die Überwachungsanwendung eine Datenbank von Zeitstempelzählern enthält.

16. Computerlesbares Medium, das am Computer ausführbare Anweisungen enthält, die ausgelegt sind, ein Computersystem zum Ausführen eines Verfahrens nach einem der Ansprüche 1 bis 9 zu veranlassen.

## Revendications

1. Procédé de surveillance de l'intégrité d'un fichier, le procédé comprenant les étapes consistant à :
(a) intercepter automatiquement une demande de système pour modifier une référence temporelle d'un fichier ;
(b) mettre automatiquement à jour un enregistrement d'un nombre de fois où la référence temporelle a été modifiée ;
(c) en réponse à une application de surveillance demandant l'enregistrement, fournir automatiquement l'enregistrement à l'application de surveillance pour comparaison avec les informations conservées dans l'application de surveillance ; et
(d) modifier automatiquement le comportement de l'application de surveillance si l'enregistrement ne correspond pas aux informations conservées dans l'application de surveillance.

2. Procédé selon la revendication 1, dans lequel l'enregistrement comprend un compteur.

3. Procédé selon l'une quelconque des revendications précédentes, dans lequel les étapes (a) à (d) sont accomplies pour des dossiers multiples, et dans lequel chaque dossier possède un enregistrement correspondant et une référence temporelle correspondante.

4. Procédé selon la revendication 3, dans lequel les enregistrements sont conservés dans une base de données.

5. Procédé selon la revendication 3, dans lequel l'application de surveillance conserve une base de données d'un nombre de fois où les références temporelles des dossiers ont été modifiées.

6. Procédé selon l'une quelconque des revendications précédentes, dans lequel la demande du système est générée par le système d'exploitation.

7. Procédé selon l'une quelconque des revendications précédentes, dans lequel la demande du système est générée par une application utilisateur.

8. Procédé selon l'une quelconque des revendications précédentes, dans lequel l'accès à l'enregistrement est restreint à un pilote de surveillance de la référence temporelle qui conserve l'enregistrement.

9. Procédé selon l'une quelconque des revendications précédentes, dans lequel l'accès à l'enregistrement est fourni à un pilote de surveillance de la référence temporelle qui conserve l'enregistrement.

10. Système de surveillance automatique de l'intégrité d'un dossier, le système comprenant :
un système informatique configuré pour comprendre :
une fonction de changement de référence temporelle du système d'exploitation qui fixe un temps de modification du dossier sur invocation ;
un intercepteur qui détecte quand la fonction référence temporelle est invoquée ;
un enregistrement associé au dossier et mis à jour quand une référence temporelle du dossier est modifiée en utilisant la fonction de changement de référence temporelle ; et
une application de surveillance qui modifie son comportement si les informations d'enregistrement ne correspondent pas aux informations conservées par l'application de surveillance.

11. Procédé selon la revendication 10, dans lequel le système est configuré pour maintenir des enregistrements pour dossiers multiples, et dans lequel chaque fiche possède un enregistrement correspondant.

12. Procédé selon la revendication 11, dans lequel les enregistrements sont conservés dans une base de données.

13. Procédé selon l'une quelconque des revendications 10 à 12, comprenant en outre une base de données d'application de surveillance pour l'utilisation de laquelle l'application de surveillance est adaptée pour comparer l'enregistrement du pilote avec ses propres enregistrements.

14. Système selon l'une quelconque des revendications 10 à 13, dans lequel l'enregistrement contient une mise à jour à chaque invocation de la fonction référence temporelle.

15. Système selon l'une quelconque des revendications 10 à 14, dans lequel l'application de surveillance maintient une base de données de compteurs de références temporelles.

16. Support lisible par ordinateur ayant des instructions exécutables par ordinateur adaptées pour amener un système informatique à réaliser un procédé selon l'une quelconque des revendications 1 à 9.
